# EUROPÄISCHE PATENTANMELDUNG

(11) **EP 1 120 328 A2**
(43) Veröffentlichungstag der Anmeldung: **01.08.2001**
(21) Anmeldenummer: 00127136.0
(22) Anmeldetag: 12.12.2000
(51) Int. Cl.: B62B 9/14

(54) **Kinderwagen**

(30) Priorität: 27.01.2000 DE 20004936 U
(71) Anmelder: BRITAX-TEUTONIA KINDERWAGENFABRIK GmbH, D-32120 Hiddenhausen (DE)
(72) Erfinder: Lüdeking, Günter, 32257 Bünde (DE); Ottinger, Brigitte, 32278 Kirchlengern (DE)
(74) Vertreter: Dantz, Jan Henning

(57) **Zusammenfassung**

Ein Kinderwagen, der mit einem Schiebebügel und mit einem klappbaren Verdeck ausgestattet ist, welches im wesentlichen aus Verdeckbügeln und einem flexiblen Verdeckbezug besteht, soll so gestaltet werden, daß ein optimaler Schutz durch das Verdeck gegeben ist, daß jedoch die Belüftung bei aufgeklapptem Verdeck verbessert wird, ohne daß die Gefahr besteht, daß das Kind aus dem Kinderwagen bzw. aus dem Sitz- oder Liegeeinsatz herausfällt.

Erfindungsgemäß besteht der flexible Verdeckbezug (13) aus mindestens zwei Bezugteilen (13a, 13b), wobei das der offenen Seite des Verdecks (12) abgewandte Bezugteil (13b) lösbar mit dem angrenzenden Bezugteil (13a) verbunden ist. Dem lösbaren Bezugteil (13b) ist ein an der Innenseite des Verdecks (12) festgelegter Sicherheitszuschnitt zugeordnet, der aus einem feinmaschigen Netz hergestellt ist. Das der offenen Seite des Verdecks (12) abgewandte Bezugteil (13b) ist unverlierbar oder abnehmbar mit dem angrenzenden Bezugteil (13a) verbunden.

## Beschreibung

Die Erfindung bezieht sich auf einen Kinderwagen mit einem Schiebebügel und mit einem vorzugsweise klappbaren Verdeck, welches im wesentlichen aus Verdeckbügeln und einem flexiblen Verdeckbezug besteht.

Kinderwagen sind in verschiedenen Ausführungen bekannt und werden auch als Sportwagen, Sportkarre, Buggy u.dgl. bezeichnet. Die Verdeckbügel sind U-förmig gebogen und zumindest teilweise schwenkbar am Fahrgestell des Kinderwagens gelägert, so daß das Verdeck nach unten geschwenkt werden kann. Der flexible Verdeckbezug besteht aus einem wasser- und luftundurchlässigen Material, damit das im Kinderwagen liegende Kind gegen Witterungseinflüsse geschützt ist. Das Verdeck dient jedoch nicht nur dem Schutz gegen Regen, sondern auch als Sonnenschutz. Dazu ist es jedoch notwendig, daß das Verdeck aufgeklappt ist. Da es aus einem luftundurchlässigen Material besteht, ist die Belüftung zwar ausreichend, jedoch nicht optimal.

Der Erfindung liegt die Aufgabe zugrunde, einen Kinderwagen der eingangs näher beschriebenen Art so zu gestalten, daß ein optimaler Schutz durch das Verdeck gegeben ist, daß jedoch die Belüftung bei aufgeklapptem Verdeckt verbessert wird, ohne daß die Gefahr besteht, daß das Kinder aus dem Kinderwagen bzw. aus dem Sitz- oder Liegeeinsatz herausfällt.

Die gestellte Aufgabe wird gelöst, indem der flexible Verdeckbezug aus wenigstens zwei Bezugteilen besteht, daß das der offenen Seite des Verdecks abgewandte Bezugteil lösbar mit dem angrenzenden Bezugteil verbunden ist, und daß diesem Bezugteil ein an der Innenseite des Verdecks festgelegter Sicherheitszuschnitt aus einem luftdurchlässigen Material zugeordnet ist.

Da nunmehr der flexible Verdeckbezug aus mehreren Teilen besteht, ist es möglich, daß im aufgeklappten Zustand ein oder mehrere Bezugteile abgenommen oder zur Seite geschlagen werden. Dadurch kann das im Kinderwagen liegende Kind von der Sonneneinstrahlung geschützt werden, der Sicherheitszuschnitt verhindert jedoch, daß es aus dem Sitz- oder Liegeeinsatz herausfällt, wenn beispielsweise der Kinderwagen angehoben oder gekippt wird. Außerdem wird verhindert, daß es durch eigene Bewegungen herausfällt. Da der Sicherheitszuschnitt aus einem luftdurchlässigen Material besteht, kann Luft hindurchströmen, so daß optimale Bedingungen geschaffen werden. Der Sicherheitszuschnitt sollte an der Innenseite des Verdecks fest angeordnet werden, damit er nicht versehentlich entfernt werden kann.

In bevorzugter Ausführung sollte der Sicherheitszuschnitt aus einem feinmaschigen Netz hergestellt sein. Ein derartiges Netz ist äußerst atmungsaktiv. Damit das den Sicherheitszuschnitt übergreifende Bezugteil bzw. die den Sicherheitszuschnitt übergreifenden Bezugteile nicht verloren gehen, sind sie zweckmäßigerweise mit dem jeweils angrenzenden Bezugteil unverlierbar verbunden. Dieses Bezugteil kann jedoch auch abnehmbar mit dem angrenzenden Bezugteil verbunden sein. Dies läßt sich in einfachster Weise erreichen, wenn zwei angrenzende Bezugteile über einen bestimmten Bereich fest miteinander verbunden sind. Dieser Bereich liegt zweckmäßigerweise an einer Seite, da dann das Bezugteil zur Seite übergeschlagen werden kann. Das Verdeck mit dem Sicherheitszuschnitt wird bevorzugt für Kinderwagen eingesetzt, die mit einem Liegeeinsatz oder einer Tragetasche ausgestattet sind.

Das überzuschlagende Bezugteil und somit auch der Sicherheitszuschnitt liegen dann an der dem Schiebebügel abgewandten Seite des Verdecks.

Anhand der beiliegenden Zeichnung wird die Erfindung noch näher erläutert. Es zeigt:

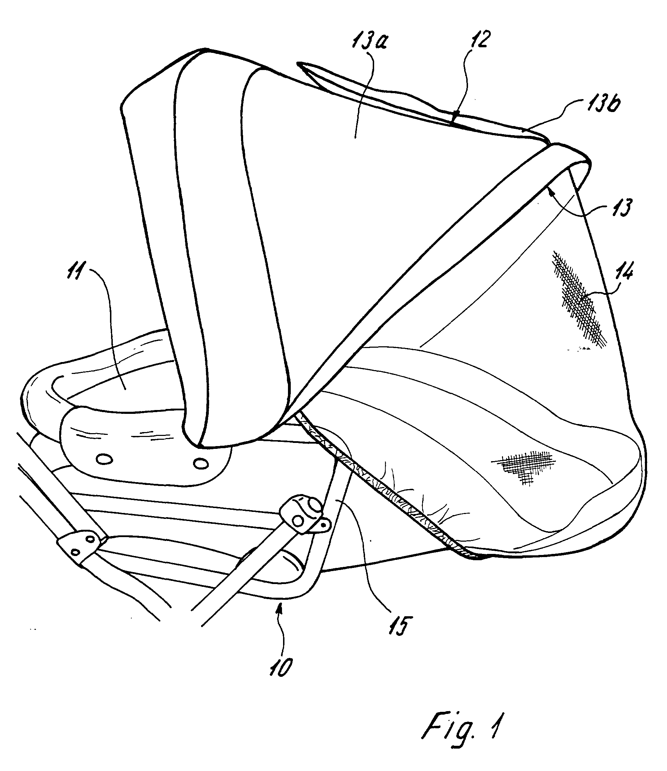

- Figur 1: einen erfindungsgemäßen Kinderwagen in einer perspektivischen Darstellung, teilweise dargestellt.

Der erfindungsgemäße Kinderwagen 10 ist mit einem nicht näher erläuterten Liegeeinsatz 11 und einem klappbaren Verdeck 12 ausgestattet. Das Verdeck 12 besteht aus mehreren U-förmig gebogenen Verdeckbügeln, über die der flexible Verdeckbezug 13 gezogen ist. Im dargestellten Ausführungsbeispiel besteht der flexible Verdeckbezug 13 aus den beiden Bezugteilen 13a und 13b. Gemäß der Darstellung nach der Figur 1 ist das der Öffnung abgewandt liegende Verdeckteil 13b zur Seite weggeschlagen. Es entsteht dadurch eine Öffnung, die durch einen Sicherheitszuschnitt 14 abgedeckt ist. Dieser Sicherheitszuschnitt 14 ist luftdurchlässig und besteht aus einem atmungsaktiven Netz. Es ist an der Innenseite des Verdecks 12 fest angeordnet, so daß es nicht abgenommen werden kann. Der Sicherheitszuschnitt ist im dargestellten Ausführungsbeispiel etwa halb so groß wie der Verdeckbezug 13. Die Verbindung der beiden Bezugteile 13a und 13b erfolgt in nicht näher dargestellter Weise durch einen Reißverschluß oder durch Druckknöpfe. Die nicht näher dargestellten Verdeckbügel sind an oberen Holmen des Kinderwagenfahrgestells 15 schwenkbar angeordnet. Das Fahrgestell 15 ist aus Gründen der vereinfachten Darstellung nur andeutungsweise dargestellt.

Die Erfindung ist nicht auf das dargestellte Ausführungsbeispiel beschränkt. Wesentlich ist, daß oberhalb der Liegefläche des Liegeeinsatzes 11 der Sicherheitszuschnitt 14 aus einem atmungsaktiven Material angeordnet ist, und daß das übergreifende Bezugteil entfernt werden kann.

## Patentansprüche

1. Kinderwagen (10) mit einem Schiebebügel und mit einem vorzugsweise klappbaren Verdeck (12), welches im wesentlichen aus Verdeckbügeln und einem flexiblen Verdeckbezug (13) besteht, **dadurch gekennzeichnet, daß** der flexible Verdeckbezug (13) aus mindestens zwei Bezugteilen (13a, 13b) besteht, daß das der offenen Seite des Verdecks (12) abgewandte Bezugteil (13b) lösbar mit dem angrenzenden Bezugteil (13a) verbunden ist, und daß dem lösbaren Bezugteil (13b) ein an der Innenseite des Verdecks (12) festgelegter Sicherheitszuschnitt (14) aus einem luftdurchlässigen Material zugeordnet ist.

2. Kinderwagen nach Anspruch 1, dadurch gekennzeichnet, daß der Sicherheitszuschnitt (14) aus einem feinmaschigen Netz hergestellt ist.

3. Kinderwagen nach Anspruch 1 oder 2, dadurch gekennzeichnet, daß das der offenen Seite des Verdecks abgewandte Bezugteil (13b) unverlierbar oder abnehmbar mit den angrenzenden Bezugteil (13a) verbunden ist.

4. Kinderwagen nach einem oder mehreren der vorhergehenden Ansprüche 1 bis 3, dadurch gekennzeichnet, daß die Bezugteile (13a, 13b) mittels eines Reißverschlusses oder durch Druckknöpfe miteinander verbunden sind.

5. Kinderwagen nach einem oder mehreren der vorhergehenden Ansprüche 1 bis 4, dadurch gekennzeichnet, daß der Sicherheitszuschnitt (14) an der dem Schiebebügel des Kinderwagens (10) abgewandten Seite oberhalb der Liegefläche des Liegeeinsatzes (11) angeordnet ist.
